# DEMANDE DE BREVET EUROPEEN

(11) **EP 0 855 529 A1**
(43) Date de publication de la demande: **29.07.1998**
(21) Numéro de dépôt: 98400167.7
(22) Date de dépôt: 28.01.1998
(51) Int. Cl.: F16C 29/06

(54) **Patin à rouleaux perfectionné**

(30) Priorité: 28.01.1997 ES 9700193
(71) Demandeur: Eisenor, S.A., 31110 Noain (Navarra) (ES)
(72) Inventeur: Lopez Vallejos, Juan José, 31003 Pamplona (ES)
(74) Mandataire: Joly, Jean-Jacques

(57) **Abrégé**

Patin à rouleaux perfectionné constitué par un corps (2) à section en « H », lequel définit longitudinalement des canaux opposés inférieur et supérieur qui servent de logement et de guide pour un ensemble de rouleaux cylindriques (1) disposés les une derrière les autres de façon consécutive, en formant une rangée continue, lesdits rouleaux (1) étant retenus dans le canal inférieur au moyen d'une carcasse formée par des pièces latérales (3) et (4), tandis que, dans le canal supérieur, les rouleaux mentionnés sont retenus au moyen d'une carcasse (5) de fermeture ; une pièce (6) étant montée sur le corps (2), laquelle pièce définit une portée en coin de manière à permettre le réglage de la pression des rouleaux (1) sur la piste de roulement.

## Description

Les dispositifs de roulements utilisés dans les systèmes de mouvement linéaire consistent traditionnellement en un ensemble de billes ou rouleaux contenus dans un corps composé de pièces diverses, dont la mission est de permettre la recirculation continue des éléments roulants et la retenue de ceux-ci à l'intérieur de leur chemin de roulement, ainsi que de faciliter le graissage de l'ensemble et de garantir la propreté desdits éléments roulants, de même que d'offrir la possibilité de régler l'ensemble avec la précontrainte désirée.

Les dispositifs de ce type qui sont déjà existants sont néanmoins d'une réalisation constructive excessivement compliquée et coûteuse, sans que, dans la prestation fonctionnelle, ils offrent l'efficacité et la simplicité qui seraient souhaitables.

Selon la présente invention, afin de fournir une solution qui soit plus appropriée aux effets des dispositifs mentionnés, on propose un patin à rouleaux cylindriques dont la réalisation est prévue selon un concept qui apporte des caractéristiques constructives et fonctionnelles très avantageuses.

Ce patin objet de l'invention comprend un corps principal présentant une double cannelure en forme de « H » servant de logement et de guide pour un ensemble de rouleaux disposés successivement en formant une rangée roulante, lesdits rouleaux étant retenus à la partie inférieure du corps au moyen d'une carcasse de retenue formée par deux demi-pièces latérales qui peuvent être associées de façon complémentaire, tandis qu'à la partie supérieure, est prévue une carcasse de fermeture supérieure correspondante qui complète le chemin de recirculation des rouleaux autour du corps principal.

Sur le corps principal mentionné, s'appuie une pièce formant cale qui permet de régler avec précision la hauteur de l'ensemble et, avec celle-ci, la pression désirée sur les rouleaux.

On obtient de cette façon, un ensemble absolument compact comprenant une unique rangée de rouleaux, lesquels sont situés de façon contiguë les uns avec les autres, de sorte qu'il est inutile de prévoir quelque type que ce soit de pièce accessoire de retenue qui impliquerait une inévitable séparation entre les rouleaux, en réduisant de cette façon, le nombre des rouleaux utiles.

Les rouleaux utilisés dans la réalisation proposée sont en outre d'une géométrie cylindrique simple, sans qu'il soit nécessaire de recourir à d'autres rouleaux de formes spéciales complexes.

Indépendamment des rouleaux et du corps guide, les carcasses supérieure et inférieure peuvent être fabriquées en matière plastique, ce qui permet une économie considérable, ainsi que la facilité du montage, lesdites pièces s'encastrant entre elles sans nécessité d'éléments auxiliaires.

De la sorte, ledit patin objet de l'invention présente de façon certaine des caractéristiques très avantageuses, ce qui le différencie et lui confère un caractère préférentiel comparativement aux dispositifs connus du même type.

La figure 1 représente une perspective éclatée du patin proposé.

La figure est une perspective du même patin, monté avec la pièce qui incorpore la vis de réglage placée face à sa position de montage.

La figure 3 est une coupe selon un plan transversal du corps guide du patin avec les rouleaux correspondants et la carcasse de fixation de ces derniers.

Les figures 4 et 5 sont deux autres perspectives éclatées correspondant à d'autres réalisations distinctes du patin selon le même concept de l'invention.

L'invention se rapporte à un patin formé d'un ensemble de rouleaux cylindriques (1) disposés les uns derrière les autres de façon consécutive en formant une rangée continue.

Ledit ensemble de rouleaux (1) est disposé autour de l'âme d'un corps (2) qui définit une double cannelure longitudinale, selon une section en « H ».

Dans la partie inférieure, où les rouleaux (1) font légèrement saillie par rapport au plan superficiel respectif du corps (2), l'ensemble des rouleaux (1) est retenu dans la cannelure correspondante par une carcasse formée par des pièces latérales complémentaires (3) et (4), lesquelles s'associent de façon correspondante entre elles, en réalisant, au moyen de lèvres respectives, une fermeture de retenue des rouleaux (1), qui maintient ces derniers à l'intérieur du canal inférieur du corps (2), avec la liberté nécessaire pour que ceux-ci puissent cependant circuler le long dudit canal.

A la partie supérieure, l'ensemble des rouleaux (1) est retenu à son tour, dans le canal respectif du corps (2), au moyen d'une autre carcasse (5), laquelle s'emboîte dans le canal supérieur correspondant du corps (2) en emprisonnant les rouleaux (1), d'une manière qui assure la retenue de ces derniers dans le canal mentionné, mais avec suffisamment de liberté pour qu'ils puissent circuler le long de ce canal.

Sur le corps (2), est en outre disposée une pièce (6) qui définit avec ledit corps (2) une portée en coin et à la partie inférieure de laquelle fait saillie une partie proéminente (7), laquelle s'emboîte dans la cannelure supérieure du corps (2).

Une pièce (8) destinée à être fixée au corps (2) est prévue pour le montage d'une vis qui peut être vissée dans un orifice (9) de la pièce (6), de sorte que, par rotation de ladite vis, la pièce (6) précitée peut être entraînée longitudinalement, par rapport au corps (2). Ainsi, grâce à la portée en coin prévue entre la pièce (6) et le corps (2), on obtient une variation de la hauteur de l'ensemble, ce qui se traduit par une variation consécutive du réglage vertical du dispositif dans le logement correspondant de l'application, modifiant en conséquence la pression des rouleaux (1) de la partie inférieure contre la piste de roulement, de sorte que ladite pression peut être réglée d'une façon très facile et précise.

La pièce (8) mentionnée est en outre munie d'un orifice fileté (10) à travers lequel on peut monter une vis correspondante pour bloquer la pièce (6) dans la position désirée.

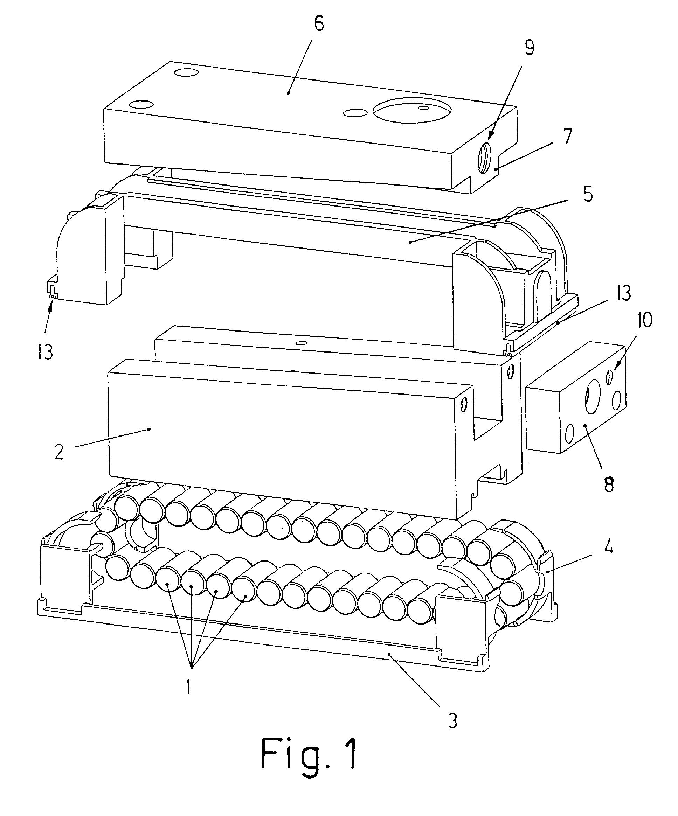

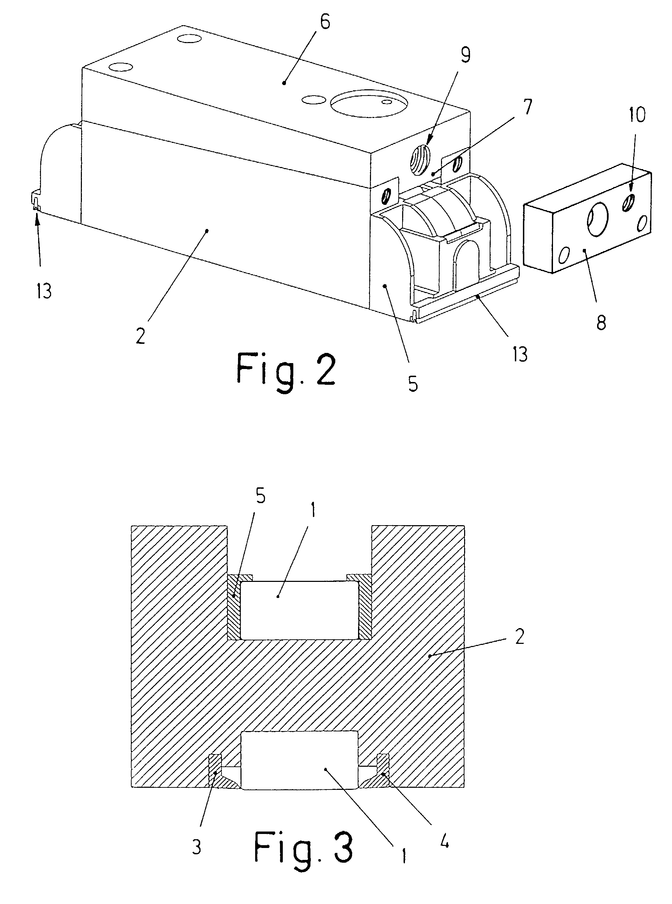

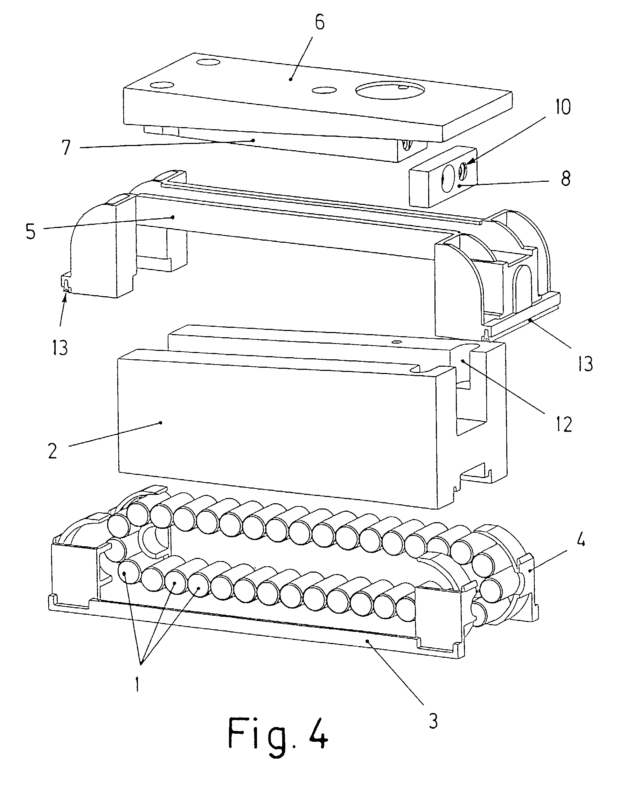

Ladite pièce (8) destinée au montage de la vis de réglage de la précontrainte peut être fixée par vissage sur l'avant de l'ensemble, comme sur les figures 1, 2 et 5, mais elle peut aussi être montée à l'intérieur, en étant fixée par emboîtement dans un évidement (12) pratiqué dans le corps (2), comme représenté sur la figure 4, ce qui évite la nécessité de recourir à un boulonnage pour la fixation de ladite pièce (8), du fait que celle-ci est logée de façon interne dans l'ensemble.

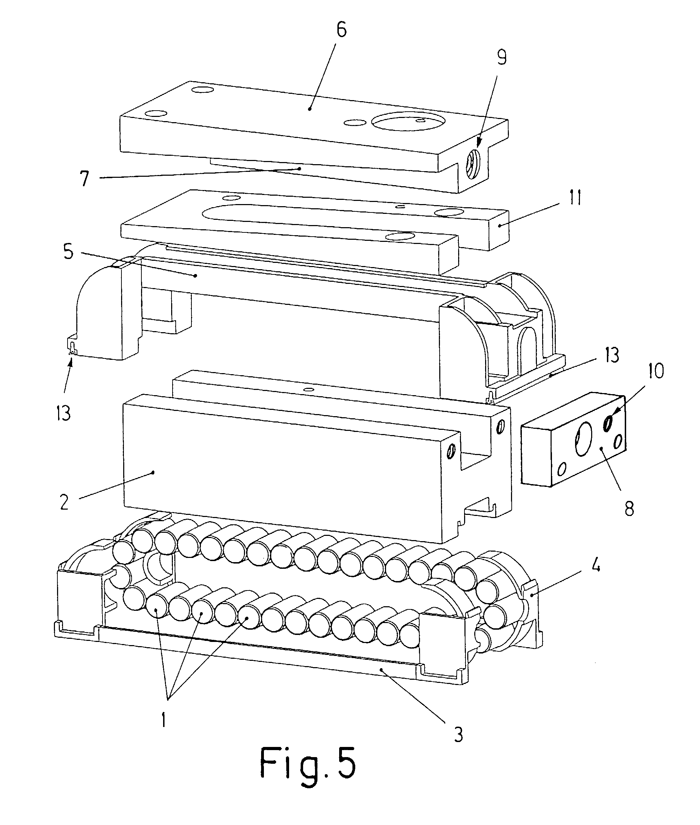

La portée en coin entre la pièce (6) et le corps (2) peut aussi être réalisée, comme représenté sur la figure 5, par l'inclusion d'une pièce intermédiaire (11) afin de définir avec celle-ci la forme en coin nécessaire par rapport à la pièce (6) , le corps (2) conservant une section longitudinale uniforme. Cela facilite en conséquence la fabrication puisque le corps (2) n'exige pas dans ce cas un usinage spécial en plan incliné. Ladite pièce (11) se fixe sur la face supérieure du corps (2) au moyen de goupilles.

Aux extrémités de la carcasse supérieure (5), sont prévus dans chaque cas des racleurs (13) placés en position basse, au moyen desquels on assure la propreté de la piste de roulement aussi bien en avant qu'en arrière du dispositif.

## Revendications

1. Patin à rouleaux perfectionné, caractérisé en ce qu'il est constitué par un corps (2) à section en « H », lequel définit longitudinalement des canaux opposés inférieur et supérieur qui servent de logement et de guide pour un ensemble de rouleaux cylindriques (1) disposés les une derrière les autres de façon consécutive, en formant une rangée continue, lesdits rouleaux (1) étant retenus dans le canal inférieur au moyen d'une carcasse formée par des pièces latérales (3) et (4) qui s'associent entre elles de façon complémentaire, tandis que, dans le canal supérieur, les rouleaux mentionnés sont retenus au moyen d'une carcasse (5) de fermeture.

2. Patins à rouleaux perfectionné, selon la revendication 1, caractérisé en ce que les pièces (3) et (4) constitutives de la carcasse de retenue des rouleaux (1) dans la partie inférieure présentent des lèvres opposées par lesquelles elles réalisent une fermeture de retenue desdits rouleaux (1) dans le canal inférieur correspondant du corps (2), tout en préservant la liberté de déplacement de ces rouleaux dans ledit canal en faisant saillie partiellement par rapport au plan inférieur du corps (2).

3. Patin à rouleaux perfectionné, selon la revendication 1, caractérisé en ce que, sur le corps (2), est monté une pièce (6), laquelle définit une portée en coin avec ledit corps (2), soit directement, soit avec interposition d'une pièce intermédiaire (11), de manière à permettre le réglage de la pression des rouleaux (1) sur la piste de roulement sur le lieu d'utilisation.

4. Patin à rouleaux perfectionné, selon la revendication 3, caractérisé en ce qu'en association avec le corps (2), est disposée une pièce (8), destinée au montage d'une vis d'actionnement permettant le déplacement de la pièce (6), ladite pièce (8) pouvant être disposée en position frontale, avec fixation par boulonnage, ou encastrée de façon interne dans un évidement (12) pratiqué dans le corps (2).
